# EUROPEAN PATENT APPLICATION

(11) **EP 4 489 205 A1**
(43) Date of publication of application: **08.01.2025**
(21) Application number: 23763110.6
(22) Date of filing: 05.01.2023
(51) Int. Cl.: H01M 50/367, H01M 50/204, H01M 50/271, H01M 50/284, H01M 50/342, H01M 50/35, H01M 50/503, H01M 50/505, H01M 50/536, H01M 50/55, H01M 50/571

(54) **BATTERY PACK**

(30) Priority: 04.03.2022 JP 2022033540
(71) Applicant: Panasonic Energy Co., Ltd., Osaka 570-8511 (JP)
(72) Inventor: KURIHARA, Hidemi, Kadoma-shi, Osaka 571-0057 (JP)
(74) Representative: Novagraaf International SA
(86) International application number: PCT/JP2023/000039
(87) International publication number: WO 2023/166847

(57) **Abstract**

A battery pack includes: a battery block including battery cells connected to one another with a lead plate; and a cover disposed on an outer periphery of the battery block and including a gas exhaust port configured to exhaust an ejection substance from an exhaust valve to outside. In the battery block, the battery cells are parallel to one another, the battery cells have electrode end surfaces disposed in a same direction, and the lead plate is connected to the electrode end surfaces. The lead plate has a transmission gap configured to allow the ejection substance to transmit through the gap. The cover includes an outer peripheral wall disposed at a periphery of the battery block, a closing plate closing an opening of the outer peripheral wall, and an exhaust duct disposed between the closing plate and the battery block and being configured to exhaust the ejection substance. The exhaust duct is partitioned into a spreading duct and an outer peripheral duct by a partition rib. The partition rib demarcates the outer peripheral duct along an outer periphery of the spreading duct and has a communication opening therein configured to allow the ejection substance to flow from the spreading duct to the outer peripheral duct. The gas exhaust port is configured to exhaust the ejection substance from the exhaust valves of the battery cells passing through the transmission gap of the lead plate, the spreading duct, and the outer peripheral duct, and is exhausted to outside from the gas exhaust port.

## Description

### TECHNICAL FIELD

The present disclosure relates to a battery pack housing a battery including an exhaust valve.

### BACKGROUND ART

A battery cell including an exhaust valve configured to open when an internal pressure is higher than a predetermined pressure enhances safety by opening the exhaust valve when the internal pressure abnormally increases. A battery pack housing the battery cell in an outer case thereof is required to safely exhaust an ejection substance exhausted from the exhaust valve to the outside of the outer case. In particular, in a battery cell using a non-aqueous electrolyte solution, since high-temperature gas obtained by vaporizing the electrolyte solution is ejected as the ejection substance from the exhaust valve, it is important to prevent an adverse effect caused by the ejection substance. In particular, it is important to prevent an adverse effect that a high-temperature ejection substance exhausted from the battery cell ignites outside the outer case. A battery pack has been developed in which a high-temperature ejection substance exhausted from an exhaust valve of a battery is exhausted to the outside of an outer case (PTL 1).

### CITATION LIST

### Patent Literature

PTL 1: Japanese Patent Laid-Open Publication No. 2008-117765

### SUMMARY OF INVENTION

A battery pack according to an aspect of the disclosure includes: a battery block including a plurality of battery cells and a lead plate connecting the plurality of battery cells to one another, each of the plurality of battery cells including an exhaust valve; and a cover disposed on an outer periphery of the battery block, the cover including a gas exhaust port configured to exhaust an ejection substance from the exhaust valve to outside. In the battery block, the plurality of battery cells are parallel to one another, the plurality of battery cells have respective electrode end surfaces disposed in a same direction, and the lead plate is connected to the respective electrode end surfaces. The lead plate has a transmission gap configured to allow the ejection substance to transmit through the transmission gap. The cover includes an outer peripheral wall disposed at a periphery of the battery block, a closing plate closing an opening of the outer peripheral wall, and an exhaust duct disposed between the closing plate and the battery block, the exhaust duct being configured to exhaust the ejection substance. The exhaust duct is partitioned into a spreading duct and an outer peripheral duct by a partition rib. The partition rib demarcates the outer peripheral duct along an outer periphery of the spreading duct and has a communication opening therein configured to allow the ejection substance to flow from the spreading duct to the outer peripheral duct. The gas exhaust port is configured to exhaust the ejection substance from the exhaust valve of the each of the plurality of battery cells passing through the transmission gap of the lead plate, the spreading duct, and the outer peripheral duct, and is exhausted to outside from the gas exhaust port of the cover.

The battery pack described above provides an advantageous effect providing high safety by preventing an adverse effect such as ignition caused by the ejection substance at a high temperature exhausted from the battery cell being exhausted to the outside of the cover.

### BRIEF DESCRIPTION OF DRAWINGS

FIG. 1 is a perspective view of a battery pack according to an exemplary embodiment of the disclosure.
FIG. 2 is a partially enlarged cross-sectional view of the battery pack along line II-II shown in FIG. 1.
FIG. 3 is a partially enlarged cross-sectional view of the battery pack along line III-III shown in FIG. 1.
FIG. 4 is a cross-sectional view of the battery pack along line IV-IV shown in FIG. 1.
FIG. 5 is an exploded perspective view of the battery pack shown in FIG. 1.
FIG. 6 is a perspective view of the battery pack shown in FIG. 1 with a closing plate removed.
FIG. 7 is a rear perspective view of the battery pack shown in FIG. 1 with the closing plate removed.

### DESCRIPTION OF EMBODIMENT

A battery pack according to an aspect of the disclosure includes: a battery block including a plurality of battery cells and a lead plate connecting the plurality of battery cells to one another, each of the plurality of battery cells including an exhaust valve; and a cover disposed on an outer periphery of the battery block, the cover including a gas exhaust port configured to exhaust an ejection substance from the exhaust valve to outside. In the battery block, the plurality of battery cells are parallel to one another, the plurality of battery cells have respective electrode end surfaces disposed in a same direction, and the lead plate is connected to the respective electrode end surfaces. The lead plate has a transmission gap configured to allow the ejection substance to transmit through the transmission gap. The cover includes an outer peripheral wall disposed at a periphery of the battery block, a closing plate closing an opening of the outer peripheral wall, and an exhaust duct disposed between the closing plate and the battery block, the exhaust duct being configured to exhaust the ejection substance. The exhaust duct is partitioned into a spreading duct and an outer peripheral duct by a partition rib. The partition rib demarcates the outer peripheral duct along an outer periphery of the spreading duct and has a communication opening therein configured to allow the ejection substance to flow from the spreading duct to the outer peripheral duct. The gas exhaust port is configured to exhaust the ejection substance from the exhaust valve of the each of the plurality of battery cells passing through the transmission gap of the lead plate, the spreading duct, and the outer peripheral duct, and is exhausted to outside from the gas exhaust port of the cover.

The battery pack described above prevents an adverse effect such as ignition caused by a high-temperature ejection substance being exhausted to the outside of the cover, and implements high safety. This is because, in the battery pack described above, energy of the ejection substance in the exhaust duct provided on an inner side of the cover is attenuated, and the ejection substance is exhausted to the outside. The exhaust duct efficiently attenuates the energy of the ejection substance by both the spreading duct and the outer peripheral duct, and exhausts the ejection substance to the outside. The spreading duct is a gap spreading planarly, and causes the ejection substance exhausted from the battery cell to spread planarly to attenuate energy. The ejection substance that has passed through the narrow transmission gap of the lead plate flows into the spreading duct, collides with an inner surface of the closing plate, spreads to the periphery, and spreads over a large planar area, so that the energy of the ejection substance is attenuated. The ejection substance flowing into the spreading duct radiates heat energy to the closing plate and the lead plate having a large area, and the heat energy is attenuated. The ejection substance with energy attenuated in the spreading duct flows into the outer peripheral duct, and the energy is further reduced and the ejection substance is exhausted from the gas exhaust port. The outer peripheral duct causes the ejection substance to flow into an elongated hollow path to radiate heat energy, and further reduces energy of motion by a flow resistance passing therethrough to exhaust the ejection substance from the gas exhaust port.

In the battery pack according to another aspect of the disclosure, one end of the outer peripheral duct may be defined as a first end, the other end of the outer peripheral duct may be defined as a second end. The first end of the outer peripheral duct may communicate with the gas exhaust port. The communication opening may be disposed between the second end of the outer peripheral duct and a center portion of the outer peripheral duct.

In the battery pack described above, since the outer peripheral duct is formed with a sealed chamber between the communication opening and the second end, the ejection substance passing through the communication opening collides with an inner surface of the outer peripheral wall which is an outer wall of the outer peripheral duct and is branched to both sides. A part of the branched ejection substance flows into the sealed chamber to reduce a flow rate on the exhaust side. Therefore, at the moment when the exhaust valve is opened, the energy of the high-temperature ejection substance exhausted by the high-speed flow is reduced by a buffering action of the sealed chamber. This configuration prevents leakage fire of the gas exhaust port caused by the exhausted ejection substance that flows at a high speed immediately after the exhaust valve is opened.

In the battery pack according to still another aspect of the disclosure, the battery block may further include a battery holder disposing the plurality of battery cells at fixed positions. The cover may further include: a holder outer peripheral wall molded unitarily with the battery holder; and a separation outer peripheral wall connected to the holder outer peripheral wall, the battery block being disposed inside the separation outer peripheral wall.

In the battery block described above, since a part of the cover is molded unitarily with the battery holder, a dedicated outer case for housing the battery block is not required, and the cover may have a simple structure. Further, since the separation outer peripheral wall is connected to the holder outer peripheral wall having a structure unitary with the battery holder to form the cover, a housing space for disposing built-in components such as a circuit board may be provided on an inner side of the separation outer peripheral wall.

In the battery pack according to still another aspect of the disclosure, the partition rib may be molded unitarily with the battery holder. In this configuration, the partition rib molded unitarily with the battery holder partitions the spreading duct and the outer peripheral duct while preventing leakage of the ejection substance. The ejection substance may flow from the spreading duct into the outer peripheral duct through the communication opening, and the energy of the ejection substance in the exhaust duct is reliably reduced.

In the battery pack according to still another aspect of the disclosure, the closing plate may have a fitting recess therein to which the partition rib is fitted and connected. The partition rib may be connected to the closing plate while being guided to the fitting recess. In this configuration, the partition rib and the closing plate are connected to each other without a gap therebetween, and leakage of the ejection substance of the spreading duct and the outer peripheral duct is effectively prevented. Therefore, the ejection substance of the spreading duct flows into the outer peripheral duct from the communication opening without leakage, and the energy of the ejection substance in the exhaust duct is reduced more reliably.

In the battery pack according to still another aspect of the disclosure, the closing plate may be molded unitarily with the partition rib. In this configuration, since the partition rib and the closing plate are connected to each other without a gap, the leakage of the ejection substance of the spreading duct and the outer peripheral duct is prevented, the ejection substance of the spreading duct flows into the outer peripheral duct through the communication opening without leakage, and the energy of the ejection substance in the exhaust duct is reduced more reliably.

In the battery pack according to still another aspect of the disclosure, the battery block may further include a battery holder disposing the plurality of battery cells at fixed positions. The partition rib may be a member separate from the battery holder and the closing plate, and is disposed between the battery holder and the closing plate.

In the battery pack according to still another aspect of the disclosure, the cover may have a rectangular outer shape, and includes a first outer peripheral wall, a second outer peripheral wall, a third outer peripheral wall, and a fourth outer peripheral wall. The outer peripheral duct may be disposed along inner sides of the first outer peripheral wall, the second outer peripheral wall, and the third outer peripheral wall. The gas exhaust port may be opened in the fourth outer peripheral wall.

In the battery pack described above, the ejection substance flows through the long outer peripheral duct disposed along the first to third outer peripheral walls, and the energy is reduced. Further, the ejection substance collides with the inner surface of the outer peripheral wall at both corner portion between the first and second outer peripheral walls and corner portion between the second and third outer peripheral walls, a direction of the ejection substance is changed, and the energy is further reduced. The ejection substance with the reduced energy is exhausted to the outside from the gas exhaust port of the fourth outer peripheral wall, and the adverse effect of the leakage fire is more effectively prevented.

In the battery pack according to still another aspect of the disclosure, the battery block may further include the battery holder disposing the plurality of battery cells at the fixed positions. The cover may further include: a holder outer peripheral wall molded unitarily with the battery holder; and a separation outer peripheral wall connected to the holder outer peripheral wall, the battery block being disposed inside the separation outer peripheral wall. The first outer peripheral wall, the second outer peripheral wall, and the third outer peripheral wall may constitute the holder outer peripheral wall, and the fourth outer peripheral wall may constitute the separation outer peripheral wall.

In the battery pack according to still another embodiment of the disclosure, a board housing space configured to house a circuit board therein may be provided between the separation outer peripheral wall and the battery block. A blocking rib may be disposed between the board housing space and the spreading duct, and the blocking rib may be configured to block the ejection substance. Both ends of the blocking rib may be connected to both ends of the partition rib.

In the battery pack described above, the ejection substance that passes through the lead plate and flows into the spreading duct may be prevented from directly flowing into the board housing space and may flow into the outer peripheral duct, and the energy is sufficiently reduced by the long outer peripheral duct provided along the first to third outer peripheral walls, thereby preventing the leakage fire from the outer peripheral duct.

In the battery pack according to still another aspect of the disclosure, the blocking rib may partition the board housing space and the spreading duct and communicates the outer peripheral duct with the board housing space.

In the battery pack described above, the ejection substance exhausted from the outer peripheral duct flows into the board housing space from the outer peripheral duct, and spreads therein to reduce the energy. The ejection substance with the reduced energy is effectively prevented from being exhausted from the gas exhaust port to the outside of the case and becoming leakage fire.

In the battery pack according to still another aspect of the disclosure, the blocking rib may be molded unitarily with the partition rib.

In the battery pack according to still another aspect of the disclosure, the fourth outer peripheral wall may have, at a corner portion, a collision wall for the ejection substance flowing out from a terminal end of the outer peripheral duct, and the gas exhaust port may be open at a center portion with respect to the collision wall.

In the battery pack described above, the ejection substance exhausted from the outer peripheral duct to the board housing space flows out from the outer peripheral duct, collides with the collision wall, is changed in direction, and spreads into the board housing space, so that energy is reduced, and the ejection substance is exhausted from the gas exhaust port.

In the battery pack according to still another aspect of the disclosure, the transmission gap of the lead plate may be 1 mm or less, and gap (d) of the spreading duct between the closing plate and the lead plate can be 3 mm or more.

In the battery pack according to still another aspect of the disclosure, inner width (W) of the outer peripheral duct between the outer peripheral wall and the partition rib may be 1 cm or less.

The disclosure will be detailed below with reference to the drawings. In the following description, terms indicating specific directions or positions (for example, "up", "down", and other terms including these terms) are used as necessary, and the use of these terms is to facilitate understanding of the invention with reference to the drawings. However, the technical scope of the invention is not limited by the meaning of these terms. In addition, portions denoted by the same reference numerals in a plurality of drawings indicate the same or equivalent portions or members.

Further, the following embodiments show specific examples of the technical idea of the invention, and the invention is not limited to the following. In addition, dimensions, materials, shapes, relative arrangements, and the like of components described below are intended to be shown without limiting the scope of the invention thereto unless otherwise specified. Contents described in one embodiment and examples can be applied to other embodiments and examples. Sizes, positional relationships, and the like of members shown in the drawings may be exaggerated for clarity of description.

### Exemplary Embodiment 1

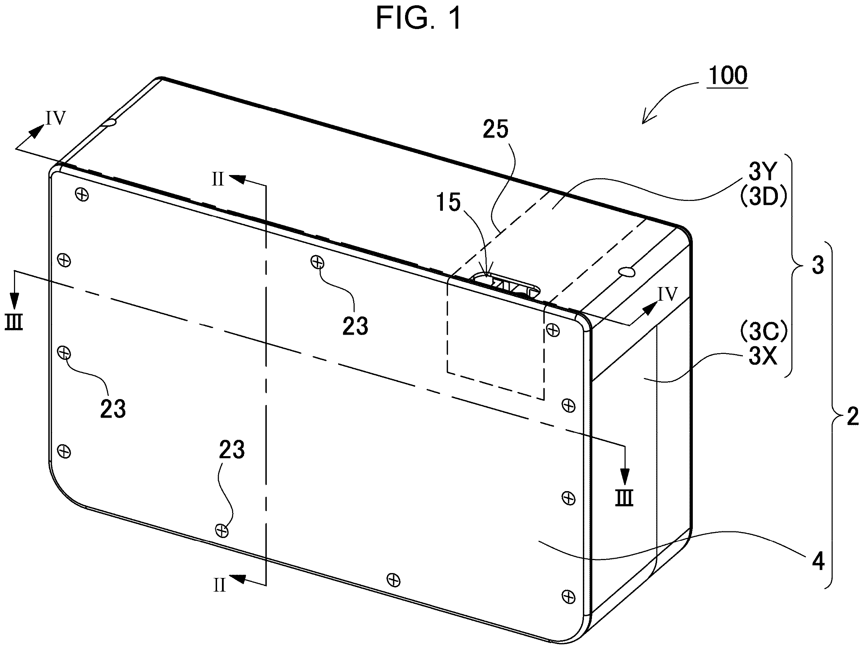

Battery pack 100 shown in FIGS. 1-7 includes battery block 10 including battery cells 1 connected to one another with lead plate 11, and cover 2 disposed on an outer periphery of battery block 10. Each battery cell 1 includes an exhaust valve Cover 2 includes gas exhaust port 15 configured to exhaust an ejection substance exhausted from the exhaust valve of battery cell 1 to the outside of a case. In battery block 10, battery cells 1 are disposed a parallel to one another, electrode end surfaces 1A of battery cells 1 are disposed in a same direction, and lead plate 11 is connected to electrode end surfaces 1A disposed in the same direction, thereby connecting battery cells 1 in series or parallel to one another. In battery block 10 in accordance with the embodiment, battery cells 1 are disposed parallel to one another, electrode end surfaces 1A of battery cells 1 are flush with one another, lead plate 11 is connected to electrode end surfaces 1A flush with one another, and battery cells 1 are connected in series or parallel to one another. However, electrode end surfaces 1A of battery cells 1 may not necessarily be flush with one another, and may be deviated from one another. Lead plate 11 of battery block 10 has transmission gaps 12 configured to transmit the ejection substance exhausted from the opened exhaust valve through transmission gaps 12 . In cover 2, closing plate 4 closes an opening surface of outer peripheral wall 3 on which battery block 10 is disposed on an inner side thereof. Exhaust duct 5 is provided on an inner side of closing plate 4. Exhaust duct 5 is configured to reduce energy of the ejection substance and exhaust the ejection substance to the outside and includes spreading duct 5A and outer peripheral duct 5B. Partition rib 6 partitions exhaust duct 5 into spreading duct 5A and outer peripheral duct 5B in order to efficiently reduce the energy of the ejection substance. Partition rib 6 demarcates outer peripheral duct 5B along an outer peripheral portion of spreading duct 5A. Partition rib 6 has communication opening 16 therein configured to allow the ejection substance from spreading duct 5A to flow into outer peripheral duct 5B through communication opening 16. In battery pack 100, the ejection substance exhausted from the exhaust valve of battery cell 1 passes through transmission gaps 12 of lead plate 11, spreading duct 5A, communication opening 16, and outer peripheral duct 5B in this order, and is exhausted to the outside from gas exhaust port 15 of cover 2 without causing leakage fire.

### Battery Cell 1

Battery cell 1 is a cylindrical battery having electrode end surfaces 1A at both ends thereof. However, the battery in the battery pack of the disclosure is not limited to a cylindrical battery. As battery cell 1, a battery having another shape such as a chargeable rectangular battery can also be used. The cylindrical battery houses electrodes and an electrolyte solution in a cylindrical metal case. The metal case has a sealed structure in which a sealing plate is airtightly fixed to an opening portion of an outer can with a closed bottom. The outer can is manufactured by pressing a metal plate. The sealing plate is airtightly fixed to a peripheral edge of the opening portion of the outer can by crimping through a packing of an insulating material. In the rectangular battery, positive and negative electrode terminals insulated from each other are provided on the sealing plate that closes the opening portion of the metal case.

In battery cell 1, exhaust valve 1v is provided on the sealing plate in order to prevent an internal pressure of the metal case from becoming abnormally high and prevent the metal case from being damaged. Exhaust valve 1v has an ejection opening in the sealing plate. The ejection substance containing gas and the like inside exhaust valve 1v is exhausted through the ejection opening while exhaust valve 1v is opened. However, in the battery cell, the exhaust valve and the ejection opening thereof may be provided in the bottom of the outer can. When the internal pressure is higher than a predetermined pressure, for example, 1.5 MPa, exhaust valve 1v is opened to prevent the metal case from being damaged due to an increase in the internal pressure. Exhaust valve 1v is opened in an abnormal state. Accordingly, when exhaust valve 1v is opened, a temperature of battery cell 1 is also very high. Therefore, the ejection substance exhausted from opened exhaust valve 1v has an abnormally high temperature due to the mixture of gas and the electrolyte solution (ejection substance). In particular, in a non-aqueous electrolyte solution secondary battery such as a lithium ion battery as battery cell 1, the ejection substance may reach an abnormally high temperature of 400°C or higher. Further, since the lithium ion battery is filled with a non-aqueous electrolyte solution, when the non-aqueous electrolyte solution is exhausted to the outside of the case at a high temperature, the non-aqueous electrolyte solution may contact air and ignite, and the temperature may become further abnormally high. Not only in the lithium ion battery, but also in other chargeable batteries, since the temperature of the ejection substance ejected from opened exhaust valve 1v becomes high, it is important to attenuate the energy of the ejection substance and exhaust the ejection substance to the outside of the case to improve safety.

### Battery Block 10

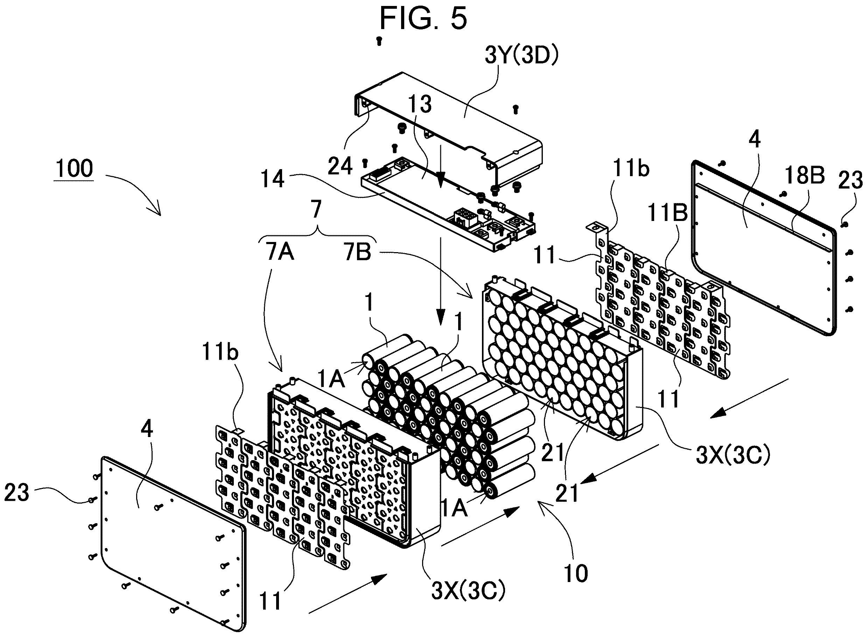

Battery block 10 disposes battery cells 1 at fixed position in battery holder 7 made of plastic. In battery block 10 shown in FIG. 5, 60 cylindrical batteries are housed in battery holder 7 and arranged in six rows and ten columns. In battery block 10 shown in FIG. 5, battery cells 1 are disposed parallel to one another, electrode end surfaces 1A of battery cells 1 face in the same direction, and lead plate 11 is connected to electrode end surfaces 1A in the same direction. Lead plate 11 has transmission gaps 12 therein configured to exhaust the ejection substance from exhaust valve 1v passes.

In battery block 10 shown in FIG. 5, battery cells 1 are connected in series and parallel to one another with lead plates 11. Lead plates 11 disposed adjacent to each other are disposed with an insulative gap in between, and the insulative gap is used as transmission gap 12 for the ejection substance exhausted from exhaust valve 1v of battery cell 1. Since lead plate 11 formed by cutting the metal plate includes arms 11a welded to electrodes of battery cells 1, transmission gap 12 for the ejection substance is also provided on an outer periphery of arm 11a. The ejection substance exhausted from exhaust valve 1v of battery cell 1 passes through transmission gap 12 of lead plate 11 and flows out from a back surface to a front surface of lead plate 11. The ejection substance flowing out to the front surface of lead plate 11 is exhausted to the outside of cover 2 through exhaust duct 5 described later.

### Battery Holder 7

Battery holder 7 shown in FIG. 5 includes outer peripheral wall 3 which is provided at an outer periphery of battery holder 7 and is molded unitarily with cover 2. However, the battery pack of the disclosure may have a structure in which cover 2 and battery holder 7 are not necessarily molded unitarily with each other, and battery holder 7 may be disposed on an inner side of outer peripheral wall 3 as a separate member, and battery cells 1 are disposed at the fixed positions in battery holder 7. Battery holder 7 shown in FIG. 5 is formed by molding insulative plastic unitarily with insertion tube portions 21 for battery cells 1. Insertion tube portion 21 holds battery cell 1 placed therein at the fixed position. Battery holder 7 in figures has a shape in which battery cells 1 of cylindrical batteries are held in insertion tube portions 21 at fixed positions into which the cylindrical batteries are inserted. In battery holder 7 in the drawing, 60 battery cells 1 are disposed in six rows in an upper-lower direction, and the batteries disposed in each row are disposed in ten columns, and battery cells 1 located in the upper-lower direction are disposed in valleys of battery cells 1 adjacent to each other in a left-right direction and are disposed in a zigzag posture.

As shown in FIG. 5, battery holder 7 is divided into a pair of cell holders 7A and 7B. Cell holders 7A and 7B constituting battery holder 7 include insertion tube portions 21 into which battery cells 1 are inserted parallel to one another. Both ends of insertion tube portion 21 are opened to expose electrode end surface 1A of the cylindrical battery inserted therein, and lead plate 11 is connected to electrode end surface 1A. Insertion tube portions 21 of cell holders 7A and 7B have a length that allows about half of battery cell 1 to be inserted therein. Half of battery cell 1 is inserted into cell holder 7A and remaining half of battery cell 1 is inserted into cell holder 7B, and battery cell 1 is disposed at the fixed position of battery holder 7. Battery holder 7 having the above structure provides an advantageous effect that battery cells 1 are reliably held while being disposed at the fixed positions by inserting battery cells 1 into insertion tube portions 21 of two divided cell holders 7A and 7B.

Further, in battery holder 7, in addition to battery cells 1, lead plates 11 are also disposed at fixed positions by a fitting structure. Battery holder 7 has a fitting recess therein guiding lead plate 11, and lead plate 11 is fitted into the fitting recess, and is disposed at the fixed position. In addition, in the fitting of battery cell 1 and lead plate 11, lead plate 11 has a through hole therein. A positioning rib molded unitarily with battery holder 7 is inserted into the through hole, and lead plate 11 is disposed at the fixed position of battery holder 7. In battery holder 7, electrode end surfaces 1A at both ends of battery cells 1 are disposed along the same direction, and lead plates 11 are welded to electrodes provided on electrode end surfaces 1A. Lead plate 11 is connected to the electrode by a method such as laser welding, spot welding, or ultrasonic welding.

### Cover 2

Cover 2 is made of a thermoplastic resin, such as polycarbonate, having high heat resistance properties, and is molded to have a rectangular shape. Battery block 10 and circuit board 13 are disposed inside cover 2. Cover 2 shown in the figures includes outer peripheral wall 3 having a rectangular outer shape and closing plate 4 that closes an opening portion of outer peripheral wall 3. Outer peripheral wall 3 includes holder outer peripheral wall 3X and separation outer peripheral wall 3Y. Holder outer peripheral wall 3X is molded unitarily with battery holder 7. Separation outer peripheral wall 3Y is connected to holder outer peripheral wall 3X. Circuit board 13 and battery block 10 are disposed on an inner side of separation outer peripheral wall 3Y. Outer peripheral wall 3 shown in FIGS. 1-5 has a rectangular outer shape, and the opening portion is closed by rectangular closing plate 4. Locking screw 23 passing through an outer peripheral edge portion of closing plate 4 are screwed into battery holder 7 and connecting bosses 24 provided on an inner side of separation outer peripheral wall 3Y, thereby fixing closing plate 4 at a fixed position on outer peripheral wall 3.

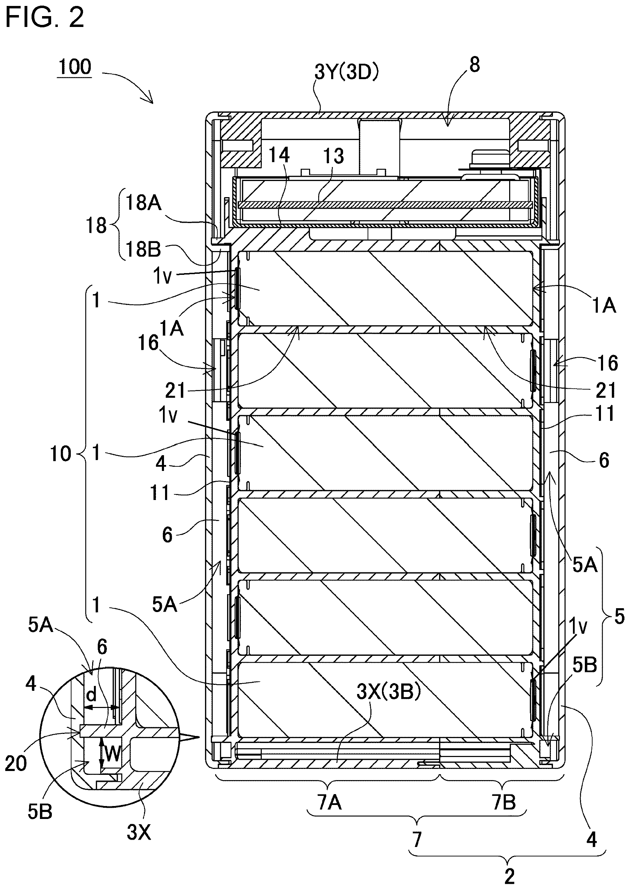

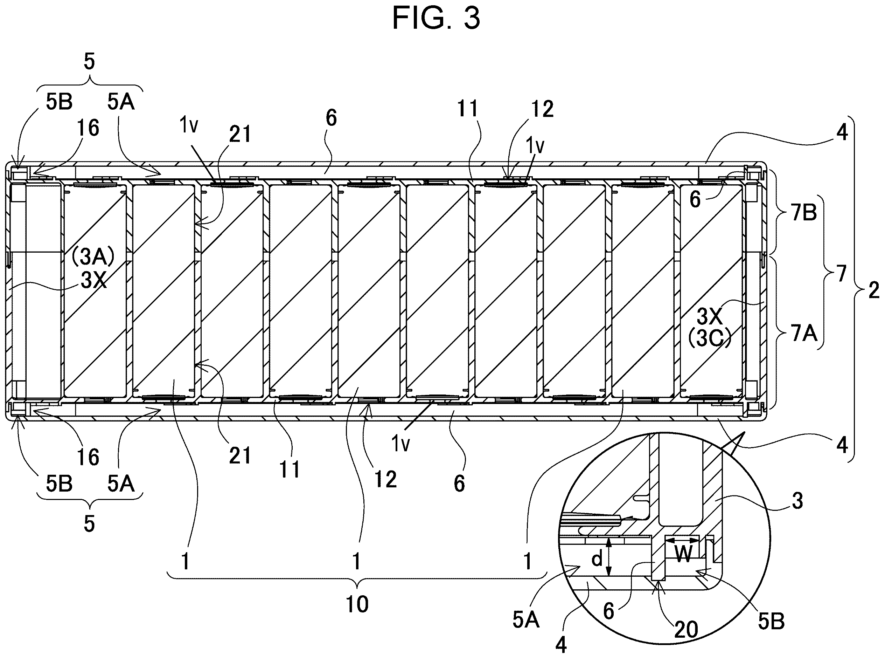

A gap is provided between cover 2 and battery block 10, i.e., between battery holder 7 and closing plate 4 shown in in FIGS. 2 and 3. This gap functions as exhaust duct 5 configured to reduce the energy of the ejection substance. In order to prevent the ejection substance exhausted to the outside of cover 2 from becoming leakage fire, the energy of the ejection substance is reduced in exhaust duct 5 and the ejection substance is exhausted from gas exhaust port 15. In cover 2, closing plate 4 is fixed to the opening of outer peripheral wall 3 in which battery block 10 is disposed at the fixed position, and exhaust duct 5 is disposed on the inner side of closing plate 4. Exhaust duct 5 is partitioned into spreading duct 5A and outer peripheral duct 5B. Outer peripheral duct 5B is disposed along the outer periphery of spreading duct 5A. Spreading duct 5A is a rectangular space extending along a planar shape. Outer peripheral duct 5B is an elongated hollow portion provided along the outer periphery of spreading duct 5A. As shown in FIGS. 2, 3, 6, and 7, battery pack 100 includes exhaust duct 5 facing both surfaces of the battery block.

### Exhaust Duct 5

Exhaust duct 5 includes partition rib 6 provided between battery holder 7 and closing plate 4. Partition rib 6 partitions exhaust duct 5 into spreading duct 5A and outer peripheral duct 5B. Partition rib 6 is disposed along the outer periphery of spreading duct 5A. Outer peripheral duct 5B is disposed along the outer periphery of spreading duct 5A. Partition rib 6 has communication opening 16 therein. the ejection substance in spreading duct 5A is guided to outer peripheral duct 5B by communication opening 16. Partition rib 6 in FIGS. 2, 3, 6, and 7 is molded unitarily with battery holder 7. Partition rib 6 formed unitarily with battery holder 7 shown in partially enlarged cross-sectional views of FIGS. 2 and 3 is disposed at a fixed position on closing plate 4 by fitting partition rib 6 into fitting recess 20 for connecting partition rib 6 to an inner surface of closing plate 4 while fitting recess 20 guides a part of partition rib 6. Partition rib 6 is disposed on both battery holder 7 and closing plate 4 so as not to form a gap through which the ejection substance leaks, and is disposed at an accurate position without positional deviation to partition exhaust duct 5 into spreading duct 5A and outer peripheral duct 5B.

However, in the battery pack according to the disclosure, partition rib 6 is molded unitarily with closing plate 4, and partition rib 6 and closing plate 4 are connected to each other without a gap. Partition rib 6 is disposed at the fixed position without positional deviation while preventing leakage of the ejection substance. Further, partition rib 6 may be manufactured as a member separate from battery holder 7 and closing plate 4, and may be disposed at the fixed position between battery holder 7 and closing plate 4 by a fitting structure, bonding, or welding.

Spreading duct 5A which is a region surrounded by partition rib 6 is a gap extending along a planar shape, and configured to spread the ejection substance flowing in from transmission gap 12 of lead plate 11 along a planar shape to reduce the energy. The ejection substance that has transmitted narrow transmission gap 12 of lead plate 11 flows into spreading duct 5A collides with the inner surface of closing plate 4, spreads to the periphery, and spreads over a large planar area, thereby reducing the energy of the ejection substance. Since spreading duct 5A is disposed between closing plate 4 and lead plate 11, the ejection substance flowing into spreading duct 5A radiates heat energy to closing plate 4 and lead plate 11 having a large area to reduce the heat energy. Further, the temperature of the substance is also be lowered by causing spreading duct 5A to adiabatically expand the ejection substance that has transmitted narrow transmission gap 12. The decrease in temperature due to the adiabatic expansion is more effective by exhausting the ejection substance transmitted narrow transmission gap 12 to wide spreading duct 5A. Accordingly, transmission gap 12 is narrowed, for example, transmission gap 12 is 1 mm or less, and gap (d) of spreading duct 5A is, for example, three times or more transmission gap 12, so that the temperature of the ejection substance is effectively lowered and guided to gas exhaust port 15.

Elongated outer peripheral duct 5B disposed on the outer periphery of spreading duct 5A causes the ejection substance to flow into an elongated hollow path to radiate heat energy, and further attenuates energy of motion by a flow resistance passing through the path to exhaust the ejection substance from gas exhaust port 15. Since the energy of the ejection substance is reduced by the flow resistance in outer peripheral duct 5B, the energy of the ejection substance is efficiently reduced by setting inner width (W) between outer peripheral wall 3 and partition rib 6 to 1 cm or less.

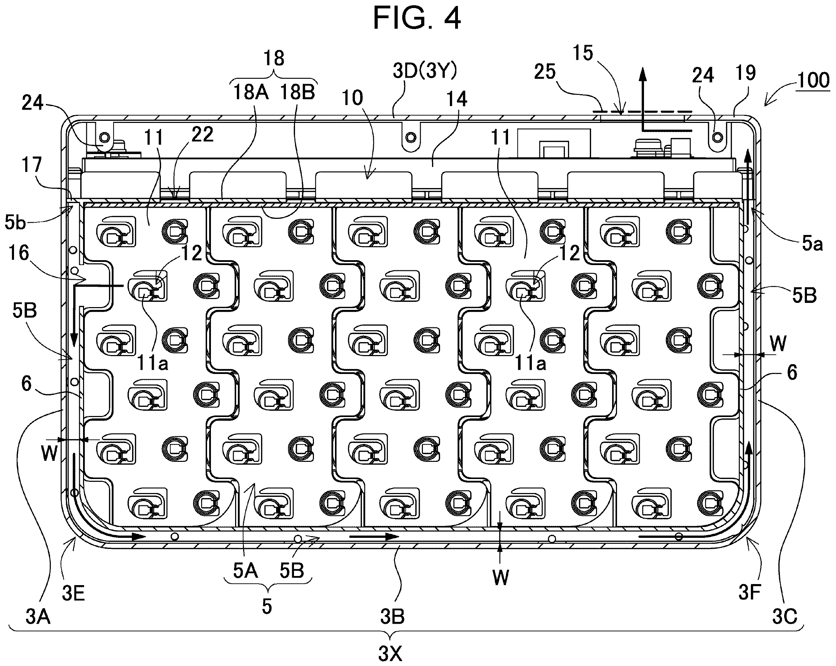

In cover 2 shown in of FIG. 4, outer peripheral wall 3 has a rectangular tubular shape including first to fourth outer peripheral walls 3A-3D, that is, first outer peripheral wall 3A, second outer peripheral wall 3B, third outer peripheral wall 3C, and fourth outer peripheral wall 3D. Partition rib 6 is provided on inner sides of first outer peripheral wall 3A to third outer peripheral wall 3C, that is, first outer peripheral wall 3A, second outer peripheral wall 3B, and third outer peripheral wall 3C. Outer peripheral duct 5B along three sides of the square is provided between partition rib 6 and outer peripheral wall 3. Fourth outer peripheral wall 3D has gas exhaust port 15 opening through the wall. The ejection substance flowing in from outer peripheral duct 5B is exhausted to the outside from fourth outer peripheral wall 3D.

In outer peripheral duct 5B extending along first outer peripheral wall 3A to third outer peripheral wall 3C, one end of outer peripheral duct 5B as first end 5a communicates with gas exhaust port 15, and the other end of outer peripheral duct 5B as second end 5b is closed by closing rib 17 without communicating with gas exhaust port 15. Outer peripheral duct 5B has communication opening 16 provided therein between second end 5b and a center portion of outer peripheral duct 5B. Exhaust duct 5 shown in FIG. 4 is a region facing first outer peripheral wall 3A. Communication opening 16 opens near closing rib 17. The structure in which communication opening 16 is provided at this position provides an advantageous effect increasing a distance from communication opening 16 to first end 5a. Elongated hollow outer peripheral duct 5B disposed along first outer peripheral wall 3A to third outer peripheral wall 3C radiates heat and reduces the energy by the flow resistance. Further, the ejection substance collides with the inner surface of outer peripheral wall 3 at both corner portion 3E between first outer peripheral wall 3A and second outer peripheral wall 3B and corner portion 3F between second outer peripheral wall 3B and third outer peripheral wall 3C, thereby further reducing the energy. The ejection substance with energy reduced in outer peripheral duct 5B provided on the inner sides of first outer peripheral wall 3A to third outer peripheral wall 3C collides with the inner surface of fourth outer peripheral wall 3D, so that the energy is reduced, and the ejection substance is exhausted to the outside from gas exhaust port 15.

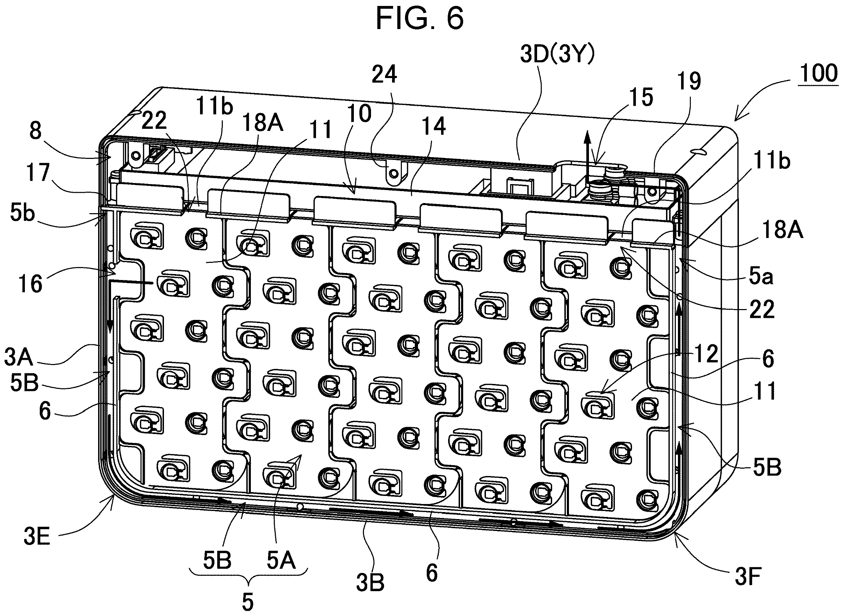

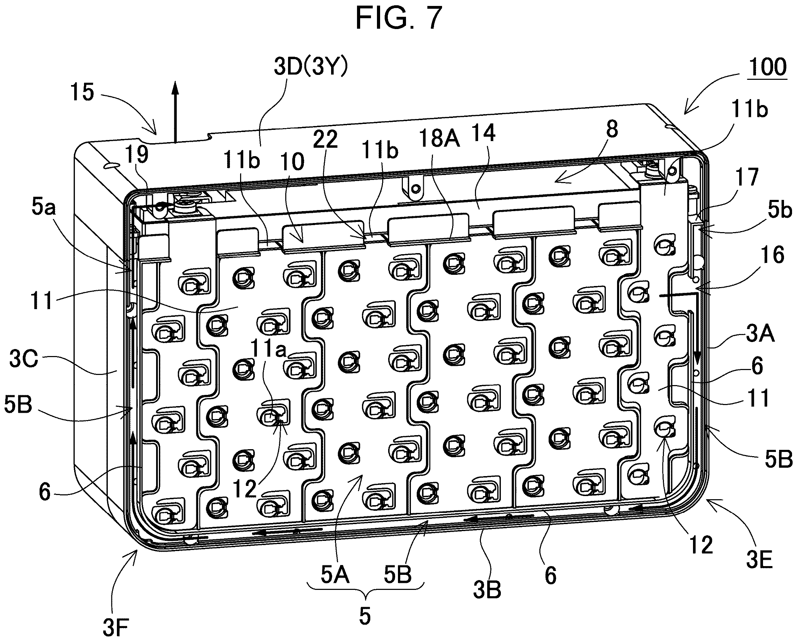

In cover 2 shown in FIG. 4, blocking rib 18 is provided on the inner side of fourth outer peripheral wall 3D in order to guide the ejection substance to gas exhaust port 15 of fourth outer peripheral wall 3D through exhaust duct 5. Blocking rib 18 guides the ejection substance in spreading duct 5A to outer peripheral duct 5B and blocks the ejection substance from directly flowing into gas exhaust port 15. Both ends of blocking rib 18 are connected to both ends of partition rib 6, and blocking rib 18 is disposed between closing plate 4 and battery block 10. Blocking rib 18 shown in FIGS. 2 and 4 has a stacked structure in which first blocking rib 18A molded unitarily with battery holder 7 overlap on second blocking rib 18B molded unitarily with closing plate 4. First blocking rib 18A molded unitarily with battery holder 7 molded unitarily with partition rib 6. First blocking rib 18A shown in FIGS. 6 and 7 has wiring opening 22 therein guiding connection piece 11b drawn out from lead plate 11. Accordingly, in order to close wiring opening 22, second blocking rib 18B molded unitarily with closing plate 4 is disposed in a stacked structure on lead plate 11 side of first blocking rib 18A. Connection piece 1 1b drawn out from lead plate 11 is connected to an output terminal or connected to circuit board 13 as a detection line for detecting an intermediate potential.

Blocking rib 18 provides board housing space 8 between fourth outer peripheral wall 3D and battery block 10. Circuit board 13 is disposed in board housing space 8. Blocking rib 18 is disposed between board housing space 8 and spreading duct 5A, and prevents the ejection substance in spreading duct 5A from flowing into board housing space 8. Circuit board 13 is connected to battery cells 1 and has a battery protection circuit and the like mounted thereon. In cover 2 described above, board housing space 8 is partitioned from spreading duct 5A by blocking rib 18 to prevent the ejection substance in spreading duct 5A from directly flowing into board housing space 8. Gas exhaust port 15 communicates with board housing space 8. The ejection substance in outer peripheral duct 5B is guided from board housing space 8 to gas exhaust port 15 and is exhausted to the outside of cover 2. In this structure, the energy of the ejection substance flowing in from outer peripheral duct 5B is further reduced in board housing space 8, and the ejection substance is exhausted to the outside from gas exhaust port 15. The ejection substance flowing into board housing space 8 may thermally damage circuit board 13, but battery pack 100 in which the ejection substance is exhausted from exhaust valve 1v cannot be reused thereafter. Accordingly, in battery pack 100 in which circuit board 13 is thermally damaged and the temperature of the ejection substance exhausted from gas exhaust port 15 can be lowered, it is possible to effectively prevent the leakage fire and ensure higher safety.

Further, in cover 2 shown in FIGS. 4 and 6, gas exhaust port 15 is not open at a corner portion of fourth outer peripheral wall 3D, but fourth outer peripheral wall 3D includes collision wall 19 with which the ejection substance flowing out from the terminal end of outer peripheral duct 5B collides. Gas exhaust port 15 is opened closer to a center portion than collision wall 19. In battery pack 100, the ejection substance flowing into board housing space 8 from outer peripheral duct 5B collides with collision wall 19, is changed in direction, and spreads into board housing space 8, so that the energy is efficiently reduced, and the ejection substance is exhausted from gas exhaust port 15.

### Label 25

In cover 2 shown in FIG. 1, label 25closes gas exhaust port 15 opening through fourth outer peripheral surface 4D. Label 25 is made of a sheet material that is peelable or configured to melt by the exhausted gas exhausted from gas exhaust port 15. In battery pack 100, label 25 closing gas exhaust port 15 opening through cover 2 of cover 2 prevents foreign matter from entering the inside through gas exhaust port 15 of cover 2. When the exhausted gas is exhausted from exhaust valve 1v of battery cell 1, label 25 is peeled off by a pressure of the exhausted gas passing through exhaust duct 5 or melts to be removed by the heat of the high-temperature exhausted gas.

### Circuit Board 13

Circuit board 13 is connected to board holder 14 by a fitting structure and disposed at a fixed position. Board holder 14 is disposed on an upper surface of battery holder 7 shown in FIGS. 2 and 5, and circuit board 13 is disposed in board housing space 8. Circuit board 13 is connected to battery cells 1 and has an electronic component implementing the protection circuit of battery cell 1 mounted thereon. The protection circuit is configured to prevent overcharge and overdischarge of battery cells 1, to prevent an overcurrent, or to block a current when the temperature abnormally rises.

### INDUSTRIAL APPLICABILITY

The disclosure can be effectively used in a battery pack for safely exhausting an ejection substance from a battery cell to the outside.

### REFERENCE MARKS IN THE DRAWINGS

- 100: battery pack
- 1: battery cell
- 1A: electrode end surface
- 1v: exhaust valve
- 2: cover
- 3: outer peripheral wall
- 3A: first outer peripheral wall
- 3B: second outer peripheral wall
- 3C: third outer peripheral wall
- 3D: fourth outer peripheral wall
- 3E: corner portion
- 3F: corner portion
- 3X: holder outer peripheral wall
- 3Y: separation outer peripheral wall
- 4: closing plate
- 5: exhaust duct
- 5A: spreading duct
- 5B: outer peripheral duct
- 5a: first end
- 5b: second end
- 6: partition rib
- 7: battery holder
- 8: board housing space
- 10: battery block
- 11: lead plate
- 11a: arm
- 11b: connection piece
- 12: transmission gap
- 13: circuit board
- 14: board holder
- 15: gas exhaust port
- 16: communication opening
- 17: closing rib
- 18: blocking rib
- 18A: first blocking rib
- 18B: second blocking rib
- 19: collision wall
- 20: fitting recess
- 21: insertion tube portion
- 22: wiring opening
- 23: locking screw
- 24: connecting boss
- 25: label

## Claims

1. A battery pack comprising:
a battery block including a plurality of battery cells and a lead plate connecting the plurality of battery cells to one another, each of the plurality of battery cells including an exhaust valve; and
a cover disposed on an outer periphery of the battery block, the cover including a gas exhaust port configured to exhaust an ejection substance from the exhaust valve to outside, wherein
in the battery block, the plurality of battery cells are parallel to one another, the plurality of battery cells have respective electrode end surfaces disposed in a same direction, and the lead plate is connected to the respective electrode end surfaces,
the lead plate has a transmission gap configured to allow the ejection substance to transmit through the transmission gap,
the cover includes an outer peripheral wall disposed at a periphery of the battery block, a closing plate closing an opening of the outer peripheral wall, and an exhaust duct disposed between the closing plate and the battery block, the exhaust duct being configured to exhaust the ejection substance,
the exhaust duct is partitioned into a spreading duct and an outer peripheral duct by a partition rib,
the partition rib demarcates the outer peripheral duct along an outer periphery of the spreading duct and has a communication opening therein configured to allow the ejection substance to flow from the spreading duct to the outer peripheral duct, and
the gas exhaust port is configured to exhaust the ejection substance from the exhaust valve of the each of the plurality of battery cells passing through the transmission gap of the lead plate, the spreading duct, and the outer peripheral duct, and is exhausted to outside from the gas exhaust port of the cover.

2. The battery pack according to claim 1, wherein
the outer peripheral duct includes a first end and a second end,
the first end of the outer peripheral duct communicates with the gas exhaust port, and
the communication opening is disposed between the second end of the outer peripheral duct and a center portion of the outer peripheral duct.

3. The battery pack according to claim 1 or 2, wherein
the battery block further includes a battery holder disposing the plurality of battery cells at fixed positions, and
the cover further includes:
a holder outer peripheral wall molded unitarily with the battery holder; and
a separation outer peripheral wall connected to the holder outer peripheral wall, the battery block being disposed inside the separation outer peripheral wall.

4. The battery pack according to claim 3, wherein the partition rib is molded unitarily with the battery holder.

5. The battery pack according to claim 4, wherein
the closing plate has a fitting recess therein to which the partition rib is fitted and connected, and
the partition rib is connected to the closing plate while being guided to the fitting recess.

6. The battery pack according to any one of claims 1 to 3, wherein the closing plate is molded unitarily with the partition rib.

7. The battery pack according to any one of claims 1 to 3, wherein
the battery block further includes a battery holder disposing the plurality of battery cells at fixed positions, and
the partition rib is a member separate from the battery holder and the closing plate, and is disposed between the battery holder and the closing plate.

8. The battery pack according to any one of claims 1 to 7, wherein
the cover has a rectangular outer shape, and includes a first outer peripheral wall, a second outer peripheral wall, a third outer peripheral wall, and a fourth outer peripheral wall,
the outer peripheral duct is disposed along inner sides of the first outer peripheral wall, the second outer peripheral wall, and the third outer peripheral wall, and
the gas exhaust port is opened in the fourth outer peripheral wall.

9. The battery pack according to claim 8, wherein
the battery block further includes the battery holder disposing the plurality of battery cells at the fixed positions,
the cover further includes:
a holder outer peripheral wall molded unitarily with the battery holder; and
a separation outer peripheral wall connected to the holder outer peripheral wall, the battery block being disposed inside the separation outer peripheral wall, and
the first outer peripheral wall, the second outer peripheral wall, and the third outer peripheral wall constitute the holder outer peripheral wall, and the fourth outer peripheral wall constitutes the separation outer peripheral wall.

10. The battery pack according to claim 9, wherein
a board housing space configured to house a circuit board therein is provided between the separation outer peripheral wall and the battery block,
a blocking rib is disposed between the board housing space and the spreading duct, and the blocking rib is configured to block the ejection substance, and
both ends of the blocking rib are connected to both ends of the partition rib.

11. The battery pack according to claim 10, wherein the blocking rib partitions the board housing space and the spreading duct and communicates the outer peripheral duct with the board housing space.

12. The battery pack according to claim 10 or 11, wherein the blocking rib is molded unitarily with the partition rib.

13. The battery pack according to any one of claims 8 to 12, wherein
the ejection substance is configured to flow out from a terminal end of the outer peripheral duct,
the fourth outer peripheral wall includes a collision wall,
the ejection substance flowing out from the terminal end of the outer peripheral duct is configured to collide with the collision wall, and
the gas exhaust port is closer to a center of the fourth outer peripheral wall than the collision wall of the fourth outer peripheral wall.

14. The battery pack according to any one of claims 1 to 13, wherein
the transmission gap of the lead plate is 1 mm or less, and
a gap of the spreading duct between the closing plate and the lead plate is 3 mm or more.

15. The battery pack according to any one of claims 1 to 14, wherein an inner width (W) of the outer peripheral duct between the outer peripheral wall and the partition rib is 1 cm or less.
